# EUROPÄISCHE PATENTSCHRIFT

(11) **EP 3 966 042 B1**
(45) Veröffentlichungstag und Bekanntmachung des Hinweises auf die Patenterteilung: **18.09.2024**
(21) Anmeldenummer: 20723000.4
(22) Anmeldetag: 27.04.2020
(51) Int. Cl.: B42D 25/324, B32B 3/30, B60K 35/00, B60Q 3/54

(54) **DEKORELEMENT MIT MEHRSCHICHTAUFBAU UND DEKOREINRICHTUNG**
DECORATIVE ELEMENT HAVING A MULTI-LAYER STRUCTURE, AND DECORATED DEVICE
ÉLÉMENT DÉCORATIF À STRUCTURE MULTICOUCHE ET AGENCEMENT DÉCORATIF

(30) Priorität: 07.05.2019 DE 102019003214
(43) Veröffentlichungstag der Anmeldung: 16.03.2022
(73) Patentinhaber: Giesecke+Devrient Currency Technology GmbH, 81677 München (DE)
(72) Erfinder: FUHSE, Christian, 83624 Otterfing (DE)
(74) Vertreter: Giesecke+Devrient IP
(86) Internationale Anmeldenummer: PCT/EP2020/025192
(87) Internationale Veröffentlichungsnummer: WO 2020/224801

(56) Entgegenhaltungen:
- CN-A- 102 903 298
- DE-A1- 102007 039 996
- DE-A1- 102014 018 204
- DE-A1- 102016 201 475
- DE-A1- 102017 215 367
- GB-A- 2 446 906
- JP-A- 2015 024 650
- JP-A- H06 143 529
- JP-A- S5 996 029

## Beschreibung

Die Erfindung betrifft ein Dekorelement mit einem Mehrschichtaufbau zur Darstellung einer Auflichtansicht und einer davon unabhängigen Durchlichtansicht. Die Erfindung betrifft auch eine Dekoreinrichtung mit einem solchen Dekorelement.

Die Oberflächengestaltung vieler Produkte soll durch geeignete Dekorelemente einen hochwertiger Eindruck vermitteln. Dies gilt insbesondere für die Innenraumgestaltung eines Kraftfahrzeugs oder die Oberflächengestaltung von Elektrogeräten oder Möbelstücken. Zusätzlich zu diesem attraktiven visuellen Erscheinungsbild besteht aber gerade in einem Kraftfahrzeug die Notwendigkeit, dem Benutzer eine Fülle von Informationen anzuzeigen. Die verfügbare Fläche muss daher oft zwischen Dekor- und Anzeigeelementen aufgeteilt werden.

Aus der Druckschrift WO 2019/042611 A1 ist eine Mehrschichtverbundfolie für den Kfz-Bereich bekannt, die von der Rückseite her beleuchtet wird. Neben einer Deckschicht, die mit einer Oberflächentextur ausgebildet sein kann, enthält die Verbundfolie eine optische Schicht, die bei rückseitiger Beleuchtung einen gleichmäßigen Lichtdurchtritt durch die Deckschicht sicherstellt.

JP H06 14352 betrifft ein dekoratives Element mit Moire-Muster. DE 10 2017 215367 A1 betrifft eine lichtdurchlässige Mehrschichtverbundfolie aus Kunststoff, angepasst für eine gleichmäßige Ausleuchtung. GB 2 446 906 A zeigt ein Dekorpanel mit unregelmäßiger Oberflächenstruktur. DE 10 2016 201475 A1 betrifft eine Vorrichtung zum selektiven Darstellen eines Piktogrammes mittels einer photosensitiven Schicht. DE 10 2014 018204 A1 betrifft ein Sicherheitselement mit Metallpigmenten auf einer Reliefstruktur. CN 102 903 298 B betrifft ein Fälschungssicherheits-Film mit metallisierter Reliefstruktur. JP S59 96029 A betrifft ein Dekormuster mit Sägezahnstruktur. JP 2015 024650 A zeigt ein Display mit zwei Reliefstrukturen auf unterschiedlichen Höhenstufen, welche dem Betrachter von einer Betrachtungsseite im reflektierten Licht eine Erscheinung in einer einheitlichen Farbe und von der anderen Betrachtungsseite in transmittiertem Licht unterschiedliche Farben zeigen. DE 10 2007 039 996 A1 zeigt den Oberbegriff von Anspruch 1.

Davon ausgehend liegt der Erfindung die Aufgabe zugrunde, ein Dekorelement der eingangs genannten Art bereitzustellen, das einerseits einen hochwertigen dekorativen Eindruck vermittelt und anderseits bei Bedarf die Darstellung einer zuvor nicht erkennbaren Information ermöglicht. In Hinblick auf eine Massenfertigung soll das Dekorelement zudem möglichst kostengünstig und idealerweise mit nur wenigen Bauteilen erzeugt werden können.

Diese Aufgabe wird durch die Merkmale der unabhängigen Ansprüche gelöst. Weiterbildungen der Erfindung sind Gegenstand der abhängigen Ansprüche.

Gemäß der Erfindung enthält ein gattungsgemäßes Dekorelement einen Träger, der mit einer ersten Reliefstruktur zur Darstellung der Auflichtansicht und mit einer zweiten Reliefstruktur zur Darstellung der Durchlichtansicht versehen ist, wobei
- die erste Reliefstruktur auf einer ersten Höhenstufe bezogen auf den Träger angeordnet und mit einer semitransparenten, reflexionserhöhenden Beschichtung versehen ist,
- die zweite Reliefstruktur auf einer zweiten, tieferliegenden Höhenstufe bezogen auf den Träger und zumindest teilweise mit der ersten Reliefstruktur überlappend angeordnet ist, so dass
- bei reiner Auflichtbetrachtung von der Seite der ersten Reliefstruktur her die Auflichtansicht der ersten Reliefstruktur erkennbar ist, während die Durchlichtansicht der zweiten Reliefstruktur durch die semitransparente, reflexionserhöhende Beschichtung verborgen ist, und bei reiner Durchlichtbetrachtung von der Seite der ersten Reliefstruktur her die Durchlichtansicht der zweiten Reliefstruktur sichtbar ist, während die Auflichtansicht der ersten Reliefstruktur nicht erkennbar ist.

Die genannten Höhenstufen beziehen sich jeweils auf die Höhe über bzw. unter dem Träger, Unterschiedliche Höhenstufen für die erste und zweite Reliefstruktur können beispielsweise dadurch erreicht werden, dass die erste und zweite Reliefstruktur auf unterschiedlichen Seiten des Trägers vorgesehen sind, oder dass die beiden Reliefstrukturen in unterschiedlicher Höhe über einer Seite, insbesondere einer Oberfläche des Trägers angeordnet sind.

Der Träger ist vorteilhaft durch eine Trägerfolie gebildet, beispielsweise eine transparente PET-Folie guter Oberflächenqualität. Soll die Trägerfolie im Endprodukt verbleiben, ist sie vorteilhaft transparent oder zumindest transluzent ausgebildet. Wird die Folie nach dem Aufbringen des Dekorelements auf ein Zielobjekt abgezogen, kommt es auf ihrer Lichtdurchlässigkeit nicht an und sie kann auch opak sein.

Die erste Reliefstruktur ist vorteilhaft in eine erste Lackschicht, insbesondere eine erste Prägelackschicht abgeformt. Die Lackschicht ist zweckmäßig transparent oder zumindest semitransparent ausgebildet.

In einer vorteilhaften Ausgestaltung ist die erste Reliefstruktur in eine Einbettungsschicht aus einem vorzugsweise transparenten Einbettungsmaterial eingebettet, dessen Brechungsindex im sichtbaren Spektralbereich um weniger als 0,25 vorzugsweise weniger als 0,1, besonderes bevorzugt weniger als 0,05 von dem Brechungsindex des Materials der Schicht mit abgeformter erster Reliefstruktur, insbesondere die erste Prägelackschicht, abweicht. Auf diese Weise können Beugungs- und/oder Brechungseffekte der ersten Reliefstruktur im Durchlicht weitgehend vermieden werden. Die äußere Oberfläche der Einbettungsschicht ist vorzugsweise glatt und eben, um eine Beeinflussung der Auflicht- und Durchlichtansicht zu minimieren.

Die zweite Reliefstruktur ist vorteilhaft in eine zweite Lackschicht, insbesondere eine zweite Prägelackschicht abgeformt. Die zweite Lackschicht ist zweckmäßig transparent oder zumindest semitransparent ausgebildet.

Mit Vorteil sind die erste und/oder zweite Reliefstruktur durch Mikrostrukturen mit einer Strukturgröße und/oder Strukturtiefe von 100 µm oder weniger, vorzugsweise von 50 µm oder weniger, besonders bevorzugt von 10 µm oder weniger gebildet. Die Strukturgröße beschreibt dabei eine typische laterale Strukturabmessung und ist beispielsweise bei einem Beugungsgitter durch die Gitterperiode oder bei einer Mikrospiegelanordnung durch die eine Facettenbreite der Mikrospiegel gegeben. Zur Vermeidung farbaufspaltender Effekte können die Strukturabmessungen dabei oberhalb von 3 µm liegen. Die Strukturabmessungen können allerdings auch unterhalb von 1 µm liegen. So können beispielsweise farberzeugende Subwellenlängen-strukturen, wie etwa Subwellenlängengitter mit Plasmonenresonanzeffekten oder sogenannte Mottenaugenstrukturen in der ersten und/oder zweiten Reliefstruktur verwendet werden.

In einer vorteilhaften Ausgestaltung weist die erste Reliefstruktur im Wesentlichen strahlenoptisch wirkende Mikrospiegel und/der Fresnelstrukturen auf, welche vorteilhaft so angeordnet und ausgelegt sind, dass sie einen Laufeffekt und/oder eine gewölbt oder dreidimensional erscheinende Oberfläche erzeugen. Die Details derartige Auslegungen von Mikrospiegeln und Fresnelstrukturen können beispielsweise den Druckschriften WO 2007/ 079851 A1 oder WO 2004/048119 A1 entnommen werden, deren Offenbarungsgehalt insoweit in die vorliegende Anmeldung aufgenommen wird. So kann etwa durch eine Mehrzahl von Fresnellinsen ein Muster aus sich scheinbar aus der Oberfläche des Dekorelements herauswölbenden oder sich in die Oberfläche hineinwölbenden Kugeloberflächen gebildet werden. Mit den genannten Strukturen lässt sich auch ein dekoratives Erscheinungsbild erzeugen, das dem einer Metallic-Lackierung ähnelt, wie etwa in der Druckschrift WO 2011/066991 A2 genauer beschrieben.

In einer vorteilhaften Ausgestaltung enthält die zweite Reliefstruktur strahlenoptisch wirkende Mikroprismen, die zur Durchlichtansicht im Wesentlichen durch Lichtbrechung beitragen. Alternativ oder zusätzlich enthält die zweite Reliefstruktur Beugungsgitter, die zur Durchlichtansicht im Wesentlichen durch Lichtbeugung beitragen. Die zweite Reliefstruktur kann somit sowohl Beugungseffekte als auch Brechungseffekte, als auch eine Kombination von Beugungs- und Brechungseffekten für die Erzeugung der Durchlichtansicht nutzen. Beugungsgitter der zweiten Reliefstruktur können insbesondere symmetrische Gitterstrukturen, wie etwa Sinusgitter oder Rechteckgitter, aber auch asymmetrische Beugungsgitter, wie etwa Sägezahngitter oder geblazte Gitter enthalten. Ob bei einer Reliefstruktur die Beugungs- oder Brechungseffekte dominieren, hängt wesentlich von der Strukturgröße der Reliefstrukturelemente ab, aus denen die Reliefstruktur gebildet ist. Bei regelmäßigen Reliefstrukturen mit einer Periodenlänge um etwa 1 µm wird die Durchlichtansicht überwiegend durch Beugungseffekte erzeugt, während bei größeren Strukturen mit charakteristischen Abmessungen von etwa 5 µm oder mehr, oder sogar von etwa 10 µm oder mehr, ein strahlenoptisches Verhalten und Brechungseffekte dominieren.

In Ausgestaltungen, in denen Beugungseffekte bei der Erzeugung der Durchlichtansicht eine Rolle spielen, kann die zweite Reliefstruktur zur Erhöhung der Beugungseffizienz mit Vorteil mit einer hochbrechenden (Brechungsindex >1, 8 oder sogar >2,0) oder einer semitransparenten Beschichtung versehen werden.

In Ausgestaltungen, in denen Brechungseffekte die Bilderzeugung dominieren, ist eine besondere Beschichtung der zweiten Reliefstruktur in der Regel nicht erforderlich. Zur Erzeugung gut sichtbarer Brechungseffekte wird der Brechungsindexunterschied zwischen der zweiten Reliefstruktur und dem angrenzenden Umgebungsmaterial möglichst hoch gewählt. Da Luft mit einem Brechungsindex von praktisch 1 ohne Aufwand bereits einen Brechungsindexunterschied von etwa 0,5 zu den üblicherweise verwendete Prägelackmaterialien bereitstellt, besteht eine vorteilhafte einfache Lösung darin, die zweite Prägelackschicht nicht in zusätzliche Lackschichten einzubetten, sondern an Luft angrenzen zu lassen.

In einer vorteilhaften Ausgestaltung überlappt die erste Reliefstruktur die zweite Reliefstruktur nicht nur teilweise, sondern überdeckt diese vollständig. Beispielsweise kann die erste Reliefstruktur die gesamte Fläche des Dekorelements einnehmen, während die zweite Reliefstruktur nur in einem Teilbereich des Dekorelements vorliegt Konkret kann die zweite Reliefstruktur beispielsweise nur eine Flächenanteil von 50% des Flächenanteils der ersten Reliefstruktur oder weniger, insbesondere 40% oder weniger oder 30% oder weniger einnehmen. Die erste Reliefstruktur bestimmt dann mit ihrer Auflichtansicht das grundsätzliche Erscheinungsbild des Dekorelements, während die Durchlichtansicht der zweiten Reliefstruktur eine in einem kleineren Teilbereich darstellbare zusätzliche Information bereitstellt.

Die (semitransparente) reflexionserhöhende Beschichtung der ersten Reliefstruktur ist vorteilhaft durch eine dünne Metallschicht, beispielsweise eine dünne Chrom- oder Aluminiumschicht gebildet. Alternativ kann auch eine gerasterte opake Metallschicht eingesetzt werden, oder eine Druckschicht mit reflektierenden Pigmentplättchen, die die Fläche nicht vollständig bedecken. Anstatt (semitransparenter) dünner Metallschichten können als reflexionserhöhende Beschichtung weiterhin auch hochbrechende (transparente) Dielektrika wie z.B. ZnS oder auch Multischichtfolgen aus hoch- und niedrig-brechenden dielektrischen (transparenten) Materialien verwendet werden. Soweit vorliegend nicht explizit von einer metallischen Schicht ausgegangen wird, kann anstelle der bevorzugten semitransparenten reflexionserhöhenden Schicht jeweils auch (zumindest) eine transparente reflexionserhöhende Schicht verwendet werden.

In manchen Ausgestaltung kann die semitransparente, reflexionserhöhende Beschichtung auch durch ein Mehrschichtsystem, insbesondere mit Farbwechsel zwischen Auf- und Durchlicht und/oder betrachtungswinkelabhängigem Farbwechsel verwendet werden. Beispielsweise kann das Mehrschichtsystem durch einen Dünnschichtaufbau, beispielsweise mit der Schichtenfolge Absorber/Dielektrikum/Absorber gebildet sein. Dies ist insbesondere dann von Vorteil, wenn das Dekorelement neben seiner dekorativen und informationsvermittelnden Funktion auch eine absichernde Funktion aufweisen soll, beispielsweise bei der Absicherung von Wertdokumenten oder Banknoten. In diesem Fall kann auf eine mehrfarbige Hintergrundbeleuchtung auch verzichtet werden und die Durchlichtansicht gegen eine helle Punktlichtquelle, beispielsweise die Sonne oder ein Deckenstrahler geprüft werden. Die DurchsichtΣarbe kann dabei über die Interferenzfarbe(n) des Mehrschichtsystems eingestellt werden.

Der Begriff "semitransparent" bedeutet in der vorliegenden Beschreibung dabei eine Transmission von 1% bis 80%, bevorzugt von 20% bis 70%. Besonders bevorzugt ist ein Transmissionsgrad von etwa 50%, beispielsweise zwischen 45% und 55%. Die beschriebene Wirkung kann allerdings auch bei deutlich höheren oder geringeren Transmissionsgraden genutzt werden. So kann ein geringer Transmissionsgrad durch eine entsprechend hellere rückseitige Beleuchtung ausgeglichen werden. Auf der anderen Seite kann auch bei hoher Transmission die Durchlichtansicht im Auflicht ausreichend gut unterdrückt werden, indem etwa die Innenseite eines Gehäuses für das Dekorelement ausreichend dunkel bzw. lichtabsorbierend ausgebildet wird.

In einer vorteilhaften Weiterbildung enthält das Dekorelement eine Maske mit im Durchlicht opaken und transparenten Maskenbereichen. Die Durchlichtansicht wird dann nur in den transparenten Maskenbereichen sichtbar, während die opaken Maskenbereiche stets dunkel erscheinen. Die Maske kann insbesondere zwischen dem Träger und der zweiten Reliefstruktur, oder auf der zweiten Reliefstruktur vorliegen. Die Maske kann auch unterschiedlich farbige Bereiche enthalten (z.B. erzeugt durch lasierende Buntfarben), um die Farbe der Durchlichtansicht bereichsweise unterschiedlich zu gestalten bzw. zu beeinflussen.

In einer vorteilhaften Ausgestaltung ist der Träger ein Folienelement, auf dem die erste und zweite Reliefstruktur bereitgestellt werden, wobei das Folienelemente nach dem Aufbringen des Dekorelements auf ein Zielobjekt auf dem Zielobjekt verbleibt oder von dem Zielobjekt abziehbar ist. Bei dem Zielobjekt kann es sich insbesondere um eine Dekoreinrichtung, beispielsweise in der weiter unten genauer beschriebenen Art handeln. Verbleibt das Folienelement auf dem Zielobjekt, so ist das Folienelement vorteilhaft transparent oder zumindest transluzent ausgebildet. Die erste und zweite Reliefstruktur können dabei auf gegenüberliegenden Seitendes Folienelements oder auch auf derselben Seite des Folienelements übereinander angeordnet sein. Wird das Folienelement von dem Zielobjekt abgezogen, müssen die erste und zweite Reliefstruktur auf derselben Seite des Folienelements angeordnet sein.

Das Dekorelement ist nicht auf die Darstellung einer einzigen Durchlichtansicht beschränkt. In einer vorteilhaften Weiterbildung ist vielmehr vorgesehen, dass die zweite Reliefstruktur zwei oder mehr Bildteilbereiche zur Darstellung von zwei oder mehr verschiedenen Durchlichtansichten enthält, welche in Durchlichtbetrachtung aus unterschiedlichen Betrachtungsrichtungen sichtbar sind. Die zwei oder mehr Bildteilbereiche sind dabei vorteilhaft ineinander verschachtelt, wobei die Bildteilbereiche vorzugsweise durch schmale, alternierend nebeneinander angeordnete Streifen, oder durch kleine, in zwei Dimensionen ineinander verschachtelte Teilbereiche gebildet sind. Die Breite der Streifen bzw. die maximale Abmessung der kleinen Teilbereiche liegt vorteilhaft unterhalb von 150 µm, insbesondere unterhalb von 100 µm.

In einer weiteren, ebenfalls vorteilhaften Ausführung können verschiedene Durchlichtansichten anstatt ineinander verschachtelt auch in getrennten Bereichen nebeneinander vorliegen. In einer speziellen Variante kann z.B. die erste Reliefstruktur ein in Aufischt durchgängiger Dekormotiv darbieten während die zweite Reliefstruktur bereichsweise unterschiedliche Motive bereitstellt

Um dem Dekorelement ausreichende Stabilität für den bevorzugten Einsatz in der Objektdekoration, beispielsweise im Innenraum eines Kraftfahrzeugs, zu verleihen, liegt die Dicke des Dekorelements mit Vorteil oberhalb von 0,1 mm und beträgt insbesondere 0,2 mm bis 5 mm, vorzugsweise 0,5 mm bis 2 mm. Das Dekorelement weist zudem mit Vorteil hohe Festigkeit und Steifigkeit auf. Für den bevorzugten Einsatz in der Objektdekoration ist das Dekorelement auch relativ großflächig mit einer Fläche vom mehr als 5 cm², insbesondere mehr als 10 cm², 20 cm² oder sogar mehr als 50 cm² ausgebildet.

Die Erfindung enthält auch eine Dekoreinrichtung mit einem Gehäuse, das auf einer seiner Außenflächen mit einem Dekorelement der oben beschriebenen Art versehen ist, und das zumindest eine im Inneren des Gehäuses angeordnete Lichtquelle für die Erzeugung der Durchlichtansicht des Dekorelements aufweist.

Mit Vorteil ist das Dekorelement der Dekoreinrichtung auf die Darstellung von zwei oder mehr verschiedenen Durchlichtansichten auslegt. Die Dekoreinrichtung enthält dann zwei oder mehr, an unterschiedlichen Positionen im Gehäuse angeordnete Lichtquellen für die Erzeugung der zwei oder mehr verschiedenen Durchlichtansichten für einen Betrachter. Abhängig davon, ob die zugehörigen verschiedenen Durchlichtansichten in der zweiten Reliefstruktur verschachtelt oder nebeneinander vorliegen, beleuchten die zwei oder mehr Lichtquellten dieselben oder unterschiedliche Bereiche der zweiten Reliefstruktur. Um verschiedene Durchlichtansichten in verschiedenen Farben darzustellen, können die unterschiedlichen Lichtquellen Licht unterschiedlicher Farbe erzeugen.

Als Lichtquellen können mit Vorteil LEDs zum Einsatz kommen. Falls die Darstellung der Durchlichtansicht durch die zweite Reliefstruktur auf Beugungseffekten beruht, werden zum Erhalt scharfer Bilder vorteilhaft farbige LEDs mit möglichst engem Spektrum, insbesondere rote, grüne oder blaue LEDs eingesetzt. Beruht die Darstellung der Durchlichtansicht im Wesentlichen auf Brechungseffekten, so können als Lichtquellen auch Glühbirnen oder weiße LEDs oder auch farbige LEDs mit breiterem Spektrum zum Einsatz kommen. Der Brechungsindex der zweiten Prägelackschicht sollte dabei vorteilhaft nur wenig mit der Wellenlänge des Lichts variieren.

In der Dekoreinrichtung weist das Dekorelement zu der oder den Lichtquelle(n) vorteilhaft einen Abstand von mindestens 5 mm, insbesondere von mindestens 1 cm auf.

Mit Vorteil weist die Dekoreinrichtung einen Helligkeitssensor für Umgebungslicht auf, um die Helligkeit der zumindest einen Lichtquelle an die Helligkeit des Umgebungslichts anpassen zu können.

Bei der Dekoreinrichtung kann es sich beispielsweise ein Innenverkleidungsteil für ein Fahrzeug, einen Schalter oder eine Informationstafel an einem Elektrogerät oder Möbelstück handeln.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig. 1: eine schematische Darstellung eines Innenverkleidungsteils eines Fahrzeugs mit einem Dekorelement, wobei (a) eine perspektivische Ansicht des Innenverkleidungsteils zeigt, (b) das Erscheinungsbild des Dekorelements bei reiner Auflichtbetrachtung und (c) das Erscheinungsbild des Dekorelements bei reiner Durchlichtbetrachtung zeigt,
- Fig. 2: schematisch einen Ausschnitt des Dekorelements der Fig. 1 im Querschnitt,
- Fig. 3: veranschaulicht schematisch in (a) den Strahlengang im Dekorelement der Fig. 2 bei Auflichtbetrachtung und in (b) bei Durchlichtbetrachtung,
- Fig. 4: in (a) und (b) schematisch ein Innenverkleidungsteil eines Kraftfahrzeugs, das mehrere unterschiedliche Durchlichtansichten darstellen kann,
- Fig. 5: schematisch einen Ausschnitt des Dekorelements der Fig. 4 im Querschnitt, und
- Fig. 6: schematisch einen Ausschnitt eines Dekorelements mit besonders einfachem Schichtaufbau.

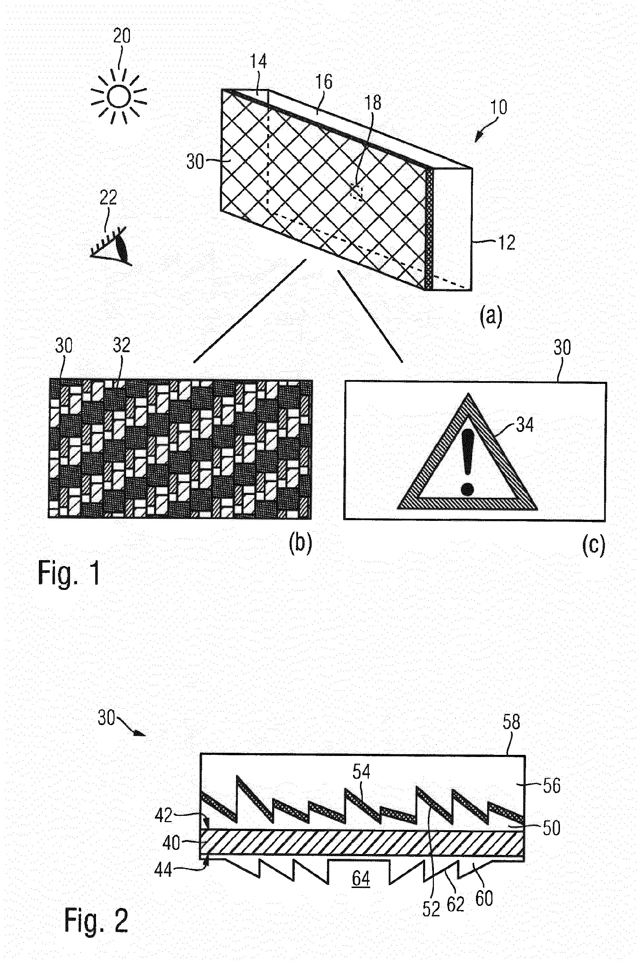

Die Erfindung wird nun am Beispiel eines Innenverkleidungsteils 10 eines Fahrzeugs erläutert. Mit Bezug auf Fig. 1(a) weist das Innenverkleidungsteil 10 ein Gehäuse 12 auf, auf dessen Vorderseite ein erfindungsgemäßes Dekorelement 30 angeordnet ist Das Gehäuse 12 weist dunkle, lichtabsorbierende Innenflächen 14 auf und ist abgesehen von dem Dekorelement 30 weitgehend lichtdicht. Auf der dem Dekorelement 30 gegenüberliegenden Rückseite 16 des Gehäuses ist eine schaltbare Lichtquelle 18, beispielsweise eine LED angeordnet. Die Lichtquelle 18 weist eine nur geringe Flächenausdehnung auf, so dass sie bei der Beleuchtung des Dekorelements 30 annähernd wie eine Punktlichtquelle wirkt und scharfe optische Effekte erzeugt.

Im ausgeschalteten Zustand der Lichtquelle 18 wird das Dekorelement 30 des Innenverkleidungsteils 10 nur von Umgebungslicht 20 im Auflicht beleuchtet. Bei einer solchen Auflichtbetrachtung erzeugt das Dekorelement 30 für den Betrachter 22 eine visuell attraktive erste Ansicht, die im Ausführungsbeispiel ein dekoratives Muster 32 mit dreidimensional anmutendem Erscheinungsbild zeigt, wie in Fig. 1(b) dargestellt. Ohne Umgebungslicht aber mit eingeschalteter Lichtquelle 18, zeigt das Dekorelement 30 eine informationshaltige Ansicht, beispielsweise eine Warninformation 34 für den Betrachter 22, wie in Fig. 1(c) dargestellt. Das dekorative Muster 32 ist in dieser Beleuchtungssituation nicht erkennbar.

Ist bei eingeschalteter Lichtquelle 18 zusätzlich Umgebungslicht 22 vorhanden, so zeigt sich dem Betrachter eine Überlagerung der beiden Ansichten 32,34, wobei die relative Helligkeit der beiden Ansichten durch die Helligkeit der Lichtquelle 18 eingestellt werden kann. Die Helligkeit der Lichtquelle 18 kann dabei über einen Sensor an die Helligkeit des gegenwärtig vorliegenden Umgebungslichts 22 angepasst werden.

Da das dekorative Muster 32 gleichmäßig über der Fläche des Dekorelementes 30 angeordnet ist, während die Warninformation 34 an einer bestimmten Stelle, im Ausführungsbeispiel etwa in der Mitte des Dekorelementes lokalisiert ist, ist die Warninformation 34 auch bei gleichzeitiger Sichtbarkeit des dekorativen Musters 32 in der Regel leicht erkennbar. Diese Erkennbarkeit kann durch einen Farbkontrast zwischen dem dekorativem Muster und der Warninformation weiter erhöht werden. Beispielsweise kann das dekorative Muster ein silbrig metallisches Erscheinungsbild aufweisen, während die Warninformation durch Verwendung einer roten LED 18 mit heller roter Farbe leuchtet.

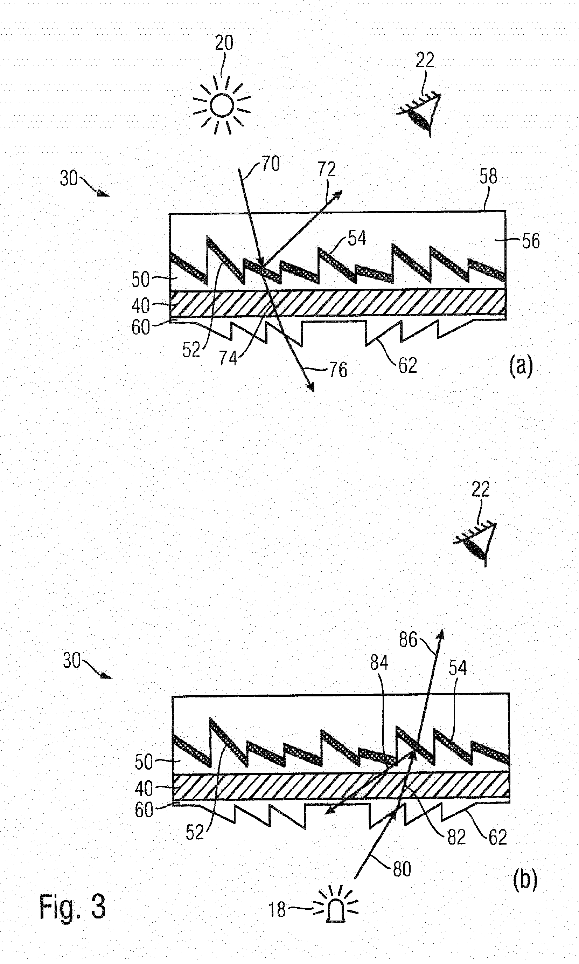

Der Aufbau des Dekorelements 30 und das Zustandekommen der unterschiedlichen Erscheinungsbilder bei Betrachtung im Umgebungslicht 22 bzw. mit Hintergrundbeleuchtung 18 werden nunmehr mit Bezug auf die Figuren 2 und 3 näher erläutert. Dabei zeigt Fig. 2 einen Ausschnitt des Dekorelements 30 im Querschnitt und Fig. 3 veranschaulicht schematisch den Strahlengang bei Auflichtbetrachtung in (a) und bei Durchlichtbetrachtung in (b).

Das Dekorelement 30 enthält einen Träger 40, beispielsweise eine transparente Polyethylenterephthalat(PET)-Trägerfolie guter Oberflächenqualität. Auf einer ersten, dem Betrachter 22 zugewandten Seite 42 des Trägers, ist eine erste transparente Prägelackschicht 50 vorgesehen, in die eine erste Reliefstruktur 52 abgeprägt ist. Die erste Reliefstruktur 52 ist im Ausführungsbeispiel durch eine Anordnung von im Wesentlichen strahlungsoptisch wirkenden Mikrospiegeln gebildet, deren Neigungswinkel so aufeinander abgestimmt sind, dass sie in Reflexion das gewünschte dekorative Muster 32 mit dreidimensionalem Erscheinungsbild erzeugen.

Um das dekorative Musters 32 im Auflicht deutlich sichtbar zu machen, ist die geprägte Reliefstruktur 52 mit einer semitransparenten reflexionserhöhenden Beschichtung 54, beispielsweise eine dünnen Chromschicht versehen. Um andererseits sicherzustellen, dass das dekorative Muster 32 bei reiner Durchlichtbetrachtung nicht in Erscheinung tritt, ist die geprägte Reliefstruktur 52 in eine transparente Einbettungsschicht 56 mit glatter Oberfläche 58 eingebettet. Die Einbettungsschicht 56 weist dabei denselben Brechungsindex wie die Prägelackschicht 50 auf und vermeidet dadurch das Auftreten von Brechungseffekten im Durchlicht.

Auf der zweiten, gegenüberliegenden Seite 44 des Trägers, die ins Innere des Gehäuses 12 zeigt, ist eine zweite transparente Prägelackschicht 60 vorgesehen, in die eine zweite Reliefstruktur 62 abgeprägt ist. Die zweite Reliefstruktur 62 ist im Ausführungsbeispiel durch eine Anordnung von im Wesentlichen lichtbrechend wirkenden Mikroprismen gebildet, deren Neigungswinkel so aufeinander abgestimmt sind, dass sie in Transmission die gewünschte Warninformation 34 erzeugen.

Da im gezeigten Ausführungsbeispiel zur Darstellung der Warninformation 34 nur Brechungseffekte, nämlich die Lichtbrechung an der Grenzfläche der Mikroprismen zur Umgebung ausgenutzt wird, sollte der Brechungsindexunterschied zwischen der zweiten Prägelackschicht 60 und der Umgebung 64 möglichst hoch sein. Im Ausführungsbeispiel wird die Prägelackschicht 62 hierfür nicht mit einer weiteren Beschichtung bzw. Einbettungsschicht versehen, sondern grenzt an Luft 64 mit einem Brechungsindex von praktisch 1.

Mit Bezug auf Fig. 3(a) trifft bei reiner Auflichtbetrachtung des Dekorelementes 30 ein einfallender Lichtstrahl 70 des Umgebungslichts 20 auf die semitransparente, reflexionserhöhende Beschichtung 54 der ersten Reliefstruktur 52. Ein Teil des einfallenden Lichts 70 wird von der Beschichtung 54 als reflektierter Strahl 72 zum Betrachter 22 reflektiert und erzeugt die für den Betrachter sichtbare Auflichtansicht der Fig. 1(b). Ein anderer Teil des einfallenden Lichts 70 wird von der semitransparenten Beschichtung 54 als transmittierter Strahl 74 durchgelassen. Die erste Prägelackschicht 50 und die Einbettungsschicht 56 weisen in der Praxis kaum Brechungsindexunterschiede auf, so dass der transmittierte Strahl 74 erst von der zweiten Reliefstruktur 62 nennenswert gebrochen wird bzw. ein sichtbares Bild erzeugt. Optional weisen auch die Der gebrochene transmittierte Strahl 76 wird von einer der lichtabsorbierenden Innenflächen 14 des Gehäuses 12 absorbiert und tritt nicht weiter in Erscheinung.

Grundsätzlich tritt auch beim Eintritt des Lichtstrahls 70 in die Einbettungsschicht 56 oder an weiteren Grenzflächen der beteiligten Schichten Lichtbrechung auf. Allerdings sind die Oberfläche 58 der Einbettungsschicht und auch die Grenzflächen zwischen Trägerfolie 40 und erster und zweiter Prägelackschicht 50, 60 glatt und eben ausgeführt, so dass an diesen Grenzflächen keine weitere Darstellung erzeugt und die Auflicht- und Durchlichtansicht kaum beeinflusst werden. Die optische Wirkung dieser Grenzflächen spielt für das Verständnis der Erfindung und das visuelle Erscheinungsbild daher keine Rolle.

Mit Bezug auf Fig. 3(b) trifft bei reiner Durchlichtbetrachtung des Dekorelementes 30 ein von der Lichtquelle 18 her einfallender Lichtstrahl 80 auf die zweite Reliefstruktur 62 und wird dort bei Eintritt in die zweite Prägelackschicht 60 gebrochen Der gebrochene Lichtstrahl 82 wird in einen reflektierten Teilstrahl 84 und einen transmittierten Teilstrahl 86 aufgespalten. An der ersten Reliefstruktur 52 tritt wieder keine nennenswerte Brechung bzw. Veränderung des Durchlichtbilds auf, da die ersten Prägelackschicht 50 und die Einbettungsschicht 56 - wie erwähnt - keinen großen Brechungsindexunterschied aufweisen. Nur optional weisen auch die zweite Prägelackschicht 60, die Trägerfolie 40 und die erste Prägelackschicht 50 bzw. die erste und die zweite Prägelackschicht kaum Brechungsindexunterschiede auf. Der gebrochene Lichtstrahl 82 läuft ohne wesentliche Richtungsänderungen bis zur semitransparenten Beschichtung 54 der ersten Reliefstruktur 52. Der transmittierte Teilstrahl 86 erzeugt die für den Betrachter 22 sichtbare Durchlichtansicht der Fig. 1(c). Der reflektierte Teilstrahl 84 wird von einer der lichtabsorbierenden Innenflächen 14 des Gehäuses 12 absorbiert und tritt auf der Seite des Betrachters 22 nicht in Erscheinung.

Bei einer Weiterbildung der Erfindung kann das Innenverkleidungsteil 100 eines Kraftfahrzeugs mehrere unterschiedliche Durchlichtansichten darstellen. Im einfachsten Fall können diese verschiedenen Ansichten nebeneinander vorliegen. So kann z.B. die zweite Reliefstruktur in einen ersten Bereich ein erstes Motiv erzeugen und einem daneben liegenden zweiten Bereich ein zweites Motiv, wobei die ersten und zweiten Bereiche der zweiten Reliefstruktur mit unterschiedlichen Lichtquellen beleuchtet werden können.

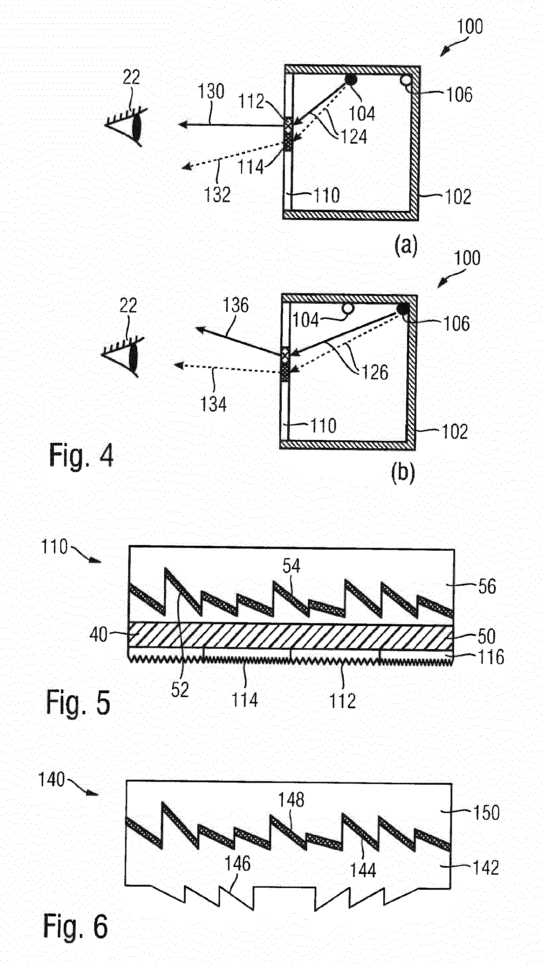

In anderen Ausführungen können verschiedene Durchsichtansichten aber auch verschachtelt im gleichen oder überlappenden Flächenbereichen erzeugt werden, wie im folgenden Ausführungsbeispiel gezeigt: Mit Bezug auf die Figuren 4(a) und (b) sind dazu in dem Gehäuse 102 des Innenverkleidungsteils 100 zwei Lichtquellen 104,106 an verschiedenen Positionen innerhalb des Gehäuses angebracht. Auf der dem Betrachter 22 zugewandten Vorderseite des Gehäuses 102 ist ein Dekorelements 110 angeordnet.

Wie am besten in der Querschnittsdarstellung des Dekorelements 110 in Fig. 5 zu erkennen, ist bei dem Dekorelement 110 die erste Reliefstruktur 52 wie bei dem Ausführungsbeispiel der Fig. 2 durch eine Mikrospiegelanordnung gebildet, die in Auflichtdarstellung ein dekoratives Muster erzeugt. Die in eine transparente Prägelackschicht 50 eingeprägte erste Reliefstruktur ist mit einer semitransparenten reflexionserhöhenden Beschichtung 54 versehen und in eine transparente Einbettungsschicht 56 eingebettet.

Die auf der dem Betrachter 22 abgewandten Seite des Dekorelements 110 angeordnete zweite Reliefstruktur ist in dieser Weiterbildung durch in eine zweite Prägelackschicht 116 abgeformte Beugungsgitter gebildet, wobei vorliegend zwei Beugungsgitter 112,114 mit unterschiedlichen Gitterperioden vorgesehen sind, die ineinander verschachtelt angeordnet sein können. Konkret sind die Beugungsgitter 112, 114 beispielsweise in schmale Streifen einer Breite von etwa 100 µm aufgeteilt und alternierend nebeneinander angeordnet, wie in Fig. 5 schematisch dargestellt. Auch eine schachbrettartige Anordnung der beiden Beugungsgitter 112,114, beispielsweise mit 100 x 100 µm² großen Feldern kommt in Betracht.

Das erste Beugungsgitter 112 erzeugt eine erste Durchlichtansicht, beispielsweise in Form eines Benachrichtigungshinweises, während das zweite Beugungsgitter eine 114 zweite Durchlichtansicht, beispielsweise in Form eines dringenderen Warnhinweises erzeugt. Um zu erreichen, dass sich die beiden Durchlichtansichten für den Betrachter 22 nicht überlagern, sind die Beugungsgitter 112, 114 mit unterschiedlichen, auf die Positionen der Lichtquellen 104,106 abgestimmte Gitterperioden ausgebildet. Beispielsweise hat bei dem Beugungsgitters 112 die Gitterperiode den Wert g₁= 1,5 µm, während die Gitterperiode bei dem Beugungsgitters 114 den Wert g₂= 1,0 µm aufweist.

In einem Kraftfahrzeug befinden sich die Augen des Fahrers zwangsläufig in einem räumlich sehr gut bestimmten und bekannten Bereich, so dass eine Abstimmung auf die Augenposition des Fahrers vergleichsweise einfach möglich ist. Die Positionen der Lichtquellen 104, 106 und die Gitterperioden der Beugungsgitter 112, 114 können daher ohne weiteres so aufeinander abgestimmt werden, dass wie in Fig. 4(a) dargestellt, von der ersten Lichtquelle 104 ausgesandtes Licht 124 von dem ersten Beugungsgitter 112 als Lichtstrahl 130 zum Betrachter 22 hin gebeugt wird und für diesen als erste Durchlichtansicht den Benachrichtigungshinweis erzeugt. Das zweite Beugungsgitter 114 beugt das Licht 124 der ersten Lichtquelle 104 dagegen in eine Richtung 132, die außerhalb des Sichtbarkeitsbereichs des Betrachters 22 liegt.

Wird andrerseits die zweite Lichtquelle 106 eingeschaltet, so wird das Licht 126 der zweiten Lichtquelle 106 von dem zweiten Beugungsgitter 114 als Lichtstrahl 134 zum Betrachter 22 hin gebeugt und erzeugt für diesen als zweite Durchlichtansicht den Warnhinweis. Das erste Beugungsgitter 112 beugt das Licht 126 der zweiten Lichtquelle 106 dagegen in eine Richtung 136, die außerhalb des Sichtbarkeitsbereichs des Betrachters 22 liegt.

Je nachdem, welche Lichtquelle eingeschaltet ist, sieht der Betrachter 22 daher die erste oder zweite Durchlichtansicht. Um den Charakter der ersten Durchlichtansicht als Benachrichtigungshinweis zu unterstützen, kann die erste Lichtquelle 104 beispielsweise Licht grüner Farbe aussenden. Die zweite Lichtquelle 106 kann rotes Licht aussenden, um den Charakter der zweiten Durchlichtansicht als dringenderen Warnhinweis zu verstärken. Sind beide Lichtquellen ausgeschaltet, zeigt das Dekorelement durch Reflexion des Umgebungslichts das von der ersten Reliefstruktur 52 zusammen mit der Beschichtung 54 erzeugte dekorative Muster mit metallischem Erscheinungsbild.

Neben den in den Figuren 2 und 5 gezeigten Aufbauten sind eine Vielzahl weiterer Schichtfolgen für ein erfindungsgemäßes Dekorelement möglich. Ein besonders einfacher Schichtaufbau ist in Fig. 6 illustriert. Das dort gezeigte Dekorelement 140 enthält einen Träger 142, der durch ein im Wesentlichen transparentes Spritzgussbauteil gebildet ist. Auf den gegenüberliegenden Seiten des Trägers 142 wurden bereits bei der Herstellung des Spritzgussbauteils die erste Reliefstruktur 144 und die zweite Reliefstruktur 146 abgeformt. Anschließend wurde die erste Reliefstruktur 144 des Trägers 142 mit einer semitransparenten, reflexionserhöhenden Beschichtung 148 versehen. Neben dem Aufdampfen einer dünnen semitransparenten Schicht kommt dabei beispielsweise auch das Aufbringen einer Farbe mit metallischen Pigmentplättchen in Frage, deren Ausrichtung nach dem Farbauftrag dem Verlauf der Reliefstruktur folgt

Ähnlich wie bei der Ausgestaltung der Fig. 2 ist die beschichtete erste Reliefstruktur 144, 148 in eine transparente Einbettungsschicht 150 eingebettet, deren Brechungsindex im Wesentlichen dem Brechungsindex des Trägermaterials des Trägers 142 entspricht.

Auch wenn die obigen Ausführungsbeispiele jeweils Innenverkleidungsteile für Kraftfahrzeuge betreffen, ist die Erfindung nicht auf solche Dekoreinrichtungen beschränkt. Eine andere vorteilhafte Anwendungsmöglichkeit bestehen etwa bei der Gestaltung von Schaltern, etwa Lichtschaltern, bei denen die erste Reliefstruktur eine metallische Dekorationsansicht für den Schalterzustand "aus" erzeugt, und bei denen die zweite Reliefstruktur durch eine Hintergrundbeleuchtung im Schalter eine Durchlichtansicht für den Schalterzustand "ein" erzeugt.

Weiter Anwendungsmöglichkeit ergeben sich bei dem Dekor von Elektrogeräten oder bei Unterhaltungselektronik, beispielsweise bei Kühlschränken, Backöfen, Spülmaschinen oder Musikanlagen. Dabei kann die Dekoreinrichtung, solange das jeweilige Gerät ausgeschaltet ist, eine homogene Dekorfläche mit einem wertigen metallischen Erscheinungsbild erzeugen. Nach dem Einschalten leuchten in der Durchlichtansicht bestimmte Informationen in der metallisch erscheinenden Fläche auf, beispielsweise ein Hinweissignal, dass die Spülmaschine läuft und nicht geöffnet werden soll, oder ein Warnsignal, das angibt, dass der Backofen heiß ist oder ein Hinweissignal, dass die Stereoanlage eingeschaltet ist.

### Bezugszeichenliste

- 10: Innenverkleidungsteil
- 12: Gehäuse
- 14: Innenflächen
- 16: Rückseite
- 18: Lichtquelle
- 20: Umgebungslicht
- 22: Betrachter
- 30: Dekorelement
- 32: dekoratives Muster
- 34: Warninformation
- 40: Träger
- 42: dem Betrachter zugewandten Seite
- 44: ins Innere des Gehäuses zeigende Seite
- 50: erste Prägelackschicht
- 52: erste Reliefstruktur
- 54: semitransparente reflexionserhöhende Beschichtung
- 56: Einbettungsschicht
- 58: Oberfläche der Einbettungsschicht
- 60: zweite Prägelackschicht
- 62: zweite Reliefstruktur
- 64: Umgebung
- 70: einfallender Lichtstrahl
- 72: reflektierter Strahl
- 74: transmittierter Strahl
- 76: gebrochener transmittierter Strahl 76
- 80: einfallender Lichtstrahl
- 82: gebrochener Lichtstrahl
- 84: reflektierter Teilstrahl
- 86: transmittierter Teilstrahl
- 100: Innenverkleidungsteil
- 102: Gehäuse
- 104, 106: Lichtquellen
- 110: Dekorelement
- 112,114: Beugungsgitter
- 116: Prägelackschicht
- 124: Licht der ersten Lichtquelle
- 126: Licht der zweiten Lichtquelle
- 130,132: gebeugtes Licht der ersten Lichtquelle
- 134,136: gebeugtes Licht der zweiten Lichtquelle
- 140: Dekorelement
- 142: Träger
- 144: erste Reliefstruktur
- 146: zweite Reliefstruktur
- 148: Beschichtung
- 150: Einbettungsschicht

## Patentansprüche

1. Dekorelement (30) mit einem Mehrschichtaufbau zur Darstellung einer Auflichtansicht und einer davon unabhängigen Durchlichtansicht, mit einem Träger (40), der mit einer ersten Reliefstruktur (52) zur Darstellung der Auflichtansicht und mit einer zweiten Reliefstruktur (62) zur Darstellung der Durchlichtansicht versehen ist, wobei
- die erste Reliefstruktur (52) auf einer ersten Höhenstufe bezogen auf den Träger (40) angeordnet und mit einer reflexionserhöhenden Beschichtung (54) versehen ist,
- die zweite Reliefstruktur (62) auf einer zweiten, tieferliegenden Höhenstufe bezogen auf den Träger (40) und zumindest teilweise mit der ersten Reliefstruktur (52) überlappend angeordnet ist, so dass
- bei reiner Auflichtbetrachtung von der Seite der ersten Reliefstruktur (52) her die Auflichtansicht der ersten Reliefstruktur (52) erkennbar ist, während die Durchlichtansicht der zweiten Reliefstruktur (62) durch die reflexionserhöhende Beschichtung (54) verborgen ist, und bei reiner Durchlichtbetrachtung von der Seite der ersten Reliefstruktur (52) her die Auflichtansicht der ersten Reliefstruktur (52) nicht erkennbar ist,
**dadurch gekennzeichnet, dass**
bei der reinen Durchlichtbetrachtung von der Seite der ersten Reliefstruktur (52) her die Durchlichtansicht der zweiten Reliefstruktur (62) sichtbar ist.

2. Dekorelement nach Anspruch 1, **dadurch gekennzeichnet, dass** die erste Reliefstruktur in eine Einbettungsschicht aus einem Einbettungsmaterial eingebettet ist, dessen Brechungsindex im sichtbaren Spektralbereich um weniger als 0,25 vorzugsweise weniger als 0,1, besonderes bevorzugt weniger als 0,05 von dem Brechungsindex des Materials abweicht, in das die erste Reliefstruktur abgeformt ist, welches bevorzugt ein Prägelack ist.

3. Dekorelement nach Anspruch 1 oder 2, **dadurch gekennzeichnet, dass** die erste und/oder zweite Reliefstruktur durch Mikrostrukturen mit einer Strukturgröße und/oder Strukturtiefe von 100 µm oder weniger, vorzugsweise von 50 µm oder weniger, besonders bevorzugt von 10 µm oder weniger gebildet ist.

4. Dekorelement nach wenigstens einem der Ansprüche 1 bis 3, **dadurch gekennzeichnet, dass** die erste Reliefstruktur im Wesentlichen strahlenoptisch wirkende Mikrospiegel und/der Fresnelstrukturen aufweist, welche vorteilhaft so angeordnet und ausgelegt sind, dass sie einen Laufeffekt und/ oder eine gewölbt erscheinende Oberfläche und/ oder eine dreidimensionale Darstellung erzeugen.

5. Dekorelement nach wenigstens einem der Ansprüche 1 bis 4, **dadurch gekennzeichnet, dass** die zweite Reliefstruktur strahlenoptisch wirkende Mikroprismen enthält, die zur Durchlichtansicht im Wesentlichen durch Lichtbrechung beitragen und/oder dass die zweite Reliefstruktur Beugungsgitter enthält, die zur Durchlichtansicht im Wesentlichen durch Lichtbeugung beitragen.

6. Dekorelement nach wenigstens einem der Ansprüche 1 bis 5, **dadurch gekennzeichnet, dass** die erste Reliefstruktur die zweite Reliefstruktur vollständig überdeckt.

7. Dekorelement nach wenigstens einem der Ansprüche 1 bis 6, **dadurch gekennzeichnet, dass** die reflexionserhöhende Beschichtung durch eine semitransparente reflexionserhöhende Beschichtung gebildet ist, vorzugsweise durch eine dünne Metallschicht, eine gerasterte opake Metallschicht, eine Druckschicht mit reflektierenden Pigmentplättchen oder einen Dünnschichtaufbau mit betrachtungswinkelabhängigen Erscheinungsbild gebildet ist.

8. Dekorelement nach wenigstens einem der Ansprüche 1 bis 7, **dadurch gekennzeichnet, dass** die reflexionserhöhende Beschichtung durch einen Dünnschichtaufbau mit betrachtungswinkelabhängigen Erscheinungsbild gebildet ist

9. Dekorelement nach wenigstens einem der Ansprüche 1 bis 8, **dadurch gekennzeichnet, dass** das Dekorelement eine Maske mit im Durchlicht opaken und transparenten Maskenbereichen enthält.

10. Dekorelement nach wenigstens einem der Ansprüche 1 bis 9, **dadurch gekennzeichnet, dass** der Träger ein Folienelement ist, auf dem die erste und zweite Reliefstruktur bereitgestellt werden, wobei das Folienelemente nach dem Aufbringen des Dekorelements auf ein Zielobjekt, insbesondere eine Dekoreinrichtung, auf dem Zielobjekt verbleibt oder von dem Zielobjekt abziehbar ist.

11. Dekorelement nach wenigstens einem der Ansprüche 1 bis 10, **dadurch gekennzeichnet, dass** die zweite Reliefstruktur zwei oder mehr Bildteilbereiche zur Darstellung von zwei oder mehr verschiedenen Durchlichtansichten enthält, welche in Durchlichtbetrachtung aus unterschiedlichen Betrachtungsrichtungen bzw. unterschiedlichen Richtungen des rückseitig einfallenden Lichts sichtbar sind.

12. Dekorelement nach Anspruch 11, **dadurch gekennzeichnet, dass** die zwei oder mehr Bildteilbereiche ineinander verschachtelt sind, wobei die Bildteilbereiche vorzugsweise durch schmale, alternierend nebeneinander angeordnete Streifen, oder durch kleine, in zwei Dimensionen ineinander verschachtelte Teilbereiche gebildet sind.

13. Dekoreinrichtung mit einem Gehäuse, das auf einer Außenfläche mit einem Dekorelement nach einem der Ansprüche 1 bis 12 versehen ist, und mit zumindest einer im Inneren des Gehäuses angeordneten Lichtquelle für die Erzeugung der Durchlichtansicht des Dekorelements.

14. Dekoreinrichtung nach Anspruch 13, mit einem Dekorelement nach Anspruch 11 oder 12 und mit zwei oder mehr, an unterschiedlichen Positionen im Gehäuse angeordneten Lichtquellen für die Erzeugung der zwei oder mehr verschiedenen Durchlichtansichten für einen Betrachter.

15. Dekoreinrichtung nach Anspruch 13 oder 14, **dadurch gekennzeichnet, dass** die Dekoreinrichtung ein Innenverkleidungsteil für ein Fahrzeug, ein Schalter oder eine Informationstafel an einem Elektrogerät oder Möbelstück ist.

## Claims

1. Decorative element (30) having a multilayer structure for presenting a reflected-light view and a transmitted-light view independent thereof, comprising a carrier (40) provided with a first relief structure (52) for presenting the reflected-light view and with a second relief structure (62) for presenting the transmitted-light view, wherein
- the first relief structure (52) is arranged at a first height level relative to the carrier (40) and is provided with a reflection-increasing coating (54),
- the second relief structure (62) is arranged at a second, lower height level relative to the carrier (40) and in a manner at least partly overlapping the first relief structure (52), such that
- in the case of pure reflected-light observation from the side of the first relief structure (52), the reflected-light view of the first relief structure (52) is discernible, while the transmitted-light view of the second relief structure (62) is hidden by the reflection-increasing coating (54), and, in the case of pure transmitted-light observation from the side of the first relief structure (52), the reflected-light view of the first relief structure (52) is not discernible,
**characterized in that**
in the case of the pure transmitted-light observation from the side of the first relief structure (52), the transmitted-light view of the second relief structure (62) is visible.

2. Decorative element according to Claim 1, **characterized in that** the first relief structure is embedded in an embedding layer composed of an embedding material whose refractive index in the visible spectral range deviates by less than 0.25, preferably less than 0.1, particularly preferably less than 0.05, from the refractive index of the material into which the first relief structure is impressed, said material preferably being an embossing lacquer.

3. Decorative element according to Claim 1 or 2, **characterized in that** the first and/or second relief structure are/is formed by microstructures having a structure size and/or structure depth of 100 µm or less, preferably of 50 µm or less, particularly preferably of 10 µm or less.

4. Decorative element according to at least one of Claims 1 to 3, **characterized in that** the first relief structure has micromirrors and/or Fresnel structures which substantially bring about a geometric optics effect and which are advantageously arranged and designed in such a way that they produce a running effect and/or a surface with a curved appearance and/or a three-dimensional representation.

5. Decorative element according to at least one of Claims 1 to 4, **characterized in that** the second relief structure contains microprisms which bring about a geometric optics effect and which contribute to the transmitted-light view substantially by way of light refraction and/or **in that** the second relief structure contains diffraction gratings which contribute to the transmitted-light view substantially by way of light diffraction.

6. Decorative element according to at least one of Claims 1 to 5, **characterized in that** the first relief structure completely covers the second relief structure.

7. Decorative element according to at least one of Claims 1 to 6, **characterized in that** the reflection-increasing coating is formed by a semitransparent reflection-increasing coating, preferably by a thin metal layer, a screened opaque metal layer, a printed layer with reflective pigment platelets, or a thin-film structure with a viewing angle-dependent appearance.

8. Decorative element according to at least one of Claims 1 to 7, **characterized in that** the reflection-increasing coating is formed by a thin-film structure with a viewing angle-dependent appearance.

9. Decorative element according to at least one of Claims 1 to 8, **characterized in that** the decorative element contains a mask having, in transmitted light, opaque and transparent mask regions.

10. Decorative element according to at least one of Claims 1 to 9, **characterized in that** the carrier is a film element, on which the first and second relief structures are provided, wherein after the decorative element has been applied to a target object, in particular a decorative device, the film element remains on the target object or is removable from the target object.

11. Decorative element according to at least one of Claims 1 to 10, **characterized in that** the second relief structure contains two or more image sub-regions for presenting two or more different transmitted-light views which are visible in transmitted-light observation from different observation directions or different directions of the light incident on the rear side.

12. Decorative element according to Claim 11, **characterized in that** the two or more image sub-regions are interleaved in one another, wherein the image sub-regions are preferably formed by narrow strips arranged alternately next to one another, or by small sub-regions interleaved in one another in two dimensions.

13. Decorative device having a housing provided with a decorative element according to any of Claims 1 to 12 on an outer surface, and having at least one light source arranged in the interior of the housing for generating the transmitted-light view of the decorative element.

14. Decorative device according to Claim 13, having a decorative element according to Claim 11 or 12 and having two or more light sources arranged at different positions in the housing for producing the two or more different transmitted-light views for an observer.

15. Decorative device according to Claim 13 or 14, **characterized in that** the decorative device is an interior trim part for a vehicle, a switch or an information panel on an electrical device or piece of furniture.

## Revendications

1. Élément décoratif (30) comprenant une structure multicouche destinée à représenter une vue en lumière réfléchie et une vue en lumière transmise indépendante, un support (40) qui est pourvu d'une première structure en relief (52) destinée à représenter la vue en lumière réfléchie et d'une deuxième structure en relief (62) destinée à représenter la vue en lumière transmise,
- la première structure en relief (52) étant disposée à un premier niveau en hauteur par rapport au support (40) et étant pourvue d'un revêtement d'augmentation de réflexion (54),
- la deuxième structure en relief (62) étant disposée à un deuxième niveau en hauteur plus bas par rapport au support (40) et recouvrant au moins partiellement la première structure en relief (52) de sorte que
- lorsque l'observation est effectuée en lumière purement réfléchie depuis le côté de la première structure en relief (52), la vue en lumière réfléchie de la première structure en relief (52) soit visible tandis que la vue en lumière transmise de la deuxième structure en relief (62) est masquée par le revêtement d'augmentation de réflexion (54) et, lorsque l'observation est effectuée en lumière purement transmise depuis le côté de la première structure en relief (52), la vue en lumière réfléchie de la première structure en relief ne soit pas visible,
**caractérisé en ce que**
lorsque l'observation est effectuée en lumière purement transmise depuis le côté de la première structure en relief (52), la vue en lumière transmise de la deuxième structure en relief (62) est visible.

2. Élément décoratif selon la revendication 1, **caractérisé en ce que** la première structure en relief est incorporée dans une couche d'incorporation formée d'un matériau d'incorporation dont l'indice de réfraction dans le domaine spectral visible diffère de l'indice de réfraction du matériau dans lequel la première structure en relief est formée, qui est de préférence un vernis de gaufrage, de moins de 0,25, de préférence de moins de 0,1, de manière particulièrement préférée de moins de 0,05.

3. Élément décoratif selon la revendication 1 ou 2, **caractérisé en ce que** la première structure en relief et/ou la deuxième structure en relief sont formées par des microstructures dont la taille de structure et/ou la profondeur de structure sont de 100 µm ou moins, de préférence de 50 µm ou moins, de manière particulièrement préférée de 10 µm ou moins.

4. Élément décoratif selon l'une au moins des revendications 1 à 3, **caractérisé en ce que** la première structure en relief comporte des micromiroirs et/ou des structures de Fresnel à action sensiblement dans le domaine de l'optique géométrique, lesquels sont avantageusement disposés et conçus de manière à produire un effet mouvant et/ou une surface d'apparence incurvée et/ou une représentation tridimensionnelle.

5. Élément décoratif selon l'une au moins des revendications 1 à 4, **caractérisé en ce que** la deuxième structure en relief contient des microprismes à action dans le domaine de l'optique géométrique, lesquels contribuent à la vue en lumière transmise sensiblement par réfraction de la lumière et/ou **en ce que** la deuxième structure en relief contient des réseaux de diffraction, lesquels contribuent à la vue en lumière transmise sensiblement par diffraction de la lumière.

6. Élément décoratif selon l'une au moins des revendications 1 à 5, **caractérisé en ce que** la première structure en relief recouvre entièrement la deuxième structure en relief.

7. Élément décoratif selon l'une au moins des revendications 1 à 6, **caractérisé en ce que** le revêtement d'augmentation de réflexion est formé par un revêtement d'augmentation de réflexion semitransparent, de préférence par une mince couche métallique, une couche métallique opaque tramée, une couche d'impression comprenant des plaquettes de pigments réfléchissantes ou une structure en couche mince comprenant une image d'apparence dépendant de l'angle d'observation.

8. Élément décoratif selon l'une au moins des revendications 1 à 7, **caractérisé en ce que** le revêtement d'augmentation de réflexion est formé par une structure en couche mince comprenant une image d'apparence dépendant de l'angle d'observation.

9. Élément décoratif selon l'une au moins des revendications 1 à 8, **caractérisé en ce que** l'élément décoratif contient un masque comprenant des zones de masque opaques et transparentes en lumière transmise.

10. Élément décoratif selon l'une au moins des revendications 1 à 9, **caractérisé en ce que** le support est un élément pelliculaire sur lequel sont prévues les première et deuxième structures en relief, les éléments pelliculaires restant sur un objet cible, en particulier un dispositif décoratif, ou pouvant être retirés de l'objet cible après que l'élément décoratif a été appliqué sur l'objet cible.

11. Élément décoratif selon l'une au moins des revendications 1 à 10, **caractérisé en ce que** la deuxième structure en relief contient deux sous-zones d'image ou plus destinées à représenter deux vues en lumière transmise différentes ou plus qui, lorsque l'observation est effectuée en lumière transmise, sont visibles depuis différentes directions d'observation ou différentes directions de la lumière incidente côté arrière.

12. Élément décoratif selon la revendication 11, **caractérisé en ce que** les deux sous-zones d'image ou plus sont imbriquées les unes dans les autres, les sous-zones d'image étant de préférence formées par des bandes étroites disposées alternativement les unes à côté des autres, ou par de petites sous-zones imbriquées les unes dans les autres en deux dimensions.

13. Dispositif décoratif comprenant un boîtier qui est pourvu, sur une surface extérieure, d'un élément décoratif selon l'une des revendications 1 à 12, et au moins une source de lumière disposée à l'intérieur du boîtier et destinée à générer la vue en lumière transmise de l'élément décoratif.

14. Dispositif décoratif selon la revendication 13, comprenant un élément décoratif selon la revendication 11 ou 12 et deux sources de lumière ou plus disposées à différentes positions dans le boîtier et destinées à générer deux vues en lumière transmise différentes ou plus à destination d'un observation.

15. Dispositif décoratif selon la revendication 13 ou 14, **caractérisé en ce que** le dispositif décoratif est une pièce d'habillage intérieur d'un véhicule, un commutateur ou un tableau d'information sur un appareil électrique ou un meuble.
